Europäisches Patentamt

European Patent Office

Office européen des brevets

(11) Publication number: **0 197 782**

**B1**

# (12) EUROPEAN PATENT SPECIFICATION

(45) Date of publication of patent specification: **27.06.90**

(51) Int. Cl.⁵: **G 11 B 20/10**

(21) Application number: **86302529.2**

(22) Date of filing: **04.04.86**

(54) Apparatus for reproducing digital signals.

(30) Priority: **05.04.85 JP 72197/85**

(43) Date of publication of application:
**15.10.86 Bulletin 86/42**

(45) Publication of the grant of the patent:
**27.06.90 Bulletin 90/26**

(84) Designated Contracting States:
**DE FR GB**

(56) References cited:
**EP-A-0 092 403**
**DE-A-2 623 427**
**GB-A-2 142 768**
**US-A-4 536 806**

(73) Proprietor: **SONY CORPORATION**
**7-35 Kitashinagawa 6-Chome Shinagawa-ku**
**Tokyo 141 (JP)**

(72) Inventor: **Takahashi, Toshihiko c/o Sony**
**Corporation**
**Patents Division 6-7-35 Kitashinagawa**
**Shinagawa-ku Tokyo 141 (JP)**
Inventor: **Inazawa, Yoshizumi c/o Sony**
**Corporation**
**Patents Division 6-7-35 Kitashinagawa**
**Shinagawa-ku Tokyo 141 (JP)**
Inventor: **Tani, Toshiyuki c/o Sony Corporation**
**Patents Division 6-7-35 Kitashinagawa**
**Shinagawa-ku Tokyo 141 (JP)**
Inventor: **Satomura, Shigeyuki c/o Sony**
**Corporation**
**Patents Division 6-7-35 Kitashinagawa**
**Shinagawa-ku Tokyo 141 (JP)**

(74) Representative: **Cotter, Ivan John et al**
**D. YOUNG & CO. 10 Staple Inn**
**London WC1V 7RD (GB)**

EP 0 197 782 B1

## Description

This invention relates to apparatus for reproducing digital signals recorded on magnetic or other recording tapes.

Apparatus for recording and reproducing digital signals is known, in which an audio or other analog signal is converted to digital signals which, together with digital signals indicating an address along the tape, a programme number and the like, are recorded by a rotary head on a magnetic tape that is being transported at a normal tape speed. The thus-recorded digital signals are reproduced from the tape, which is transported at the normal speed, by means of the rotary head scanning the tape, and the reproduced digital signals are converted to the corresponding audio or other analog signal, while the reproduced address, programme number and the like are available for identifying the audio or other analog signal being reproduced. An example of apparatus for recording and reproducing digital signals is disclosed in detail in our European Patent Application Publication No. EP—A—0 092 403.

In recording and reproducing apparatus of the above-described type, the tape can be transported at a high speed, for example in fast-forward and fast-rewind modes of operation, when searching for a particular recorded programme that is to be played back or reproduced. Even when the tape is thus transported at a high speed, it is desirable that the portion of the recorded digital signals indicating the address and programme number be reproduced by the rotary head for use in indicating the position of the tape and for controlling the transport or drive of the tape. However, if the rotary head is rotated at the normal speed of rotation when the tape is being transported at high speed, the relative speed between the rotary head and the transported tape will be different from the relative speed therebetween in the normal playback mode, and it becomes difficult to reproduce the digital signals recorded on the tape.

Our European Patent Application No. 85307747.3 filed on 25 October 1985 (Publication No. EP—A—180432) discloses an apparatus, for reproducing digital signals recorded on a tape, in which, when the tape is transported at a high speed, the speed of rotation of the rotary head is suitably controlled so that the relative speed between the rotary head and the tape remains substantially equal to that in the normal playback mode. In the foregoing apparatus, the rotary head is rotated in the same direction for the normal playback mode, the fast-forward mode and the fast-rewind mode. In order to make the relative speed between the rotary head and the tape in the rewind mode equal to the relative speed in the normal playback mode, it is necessary to reduce substantially the speed of rotation of the rotary head as compared with its speed of rotation for the normal playback mode. However, if the speed of rotation of the rotary head is substantially decreased, the rotation of a motor driving the rotary head becomes unstable, and the output from a detecting device (such as a frequency or pulse generator) for indicating the rotational phase of the rotary head also becomes unstable. Accordingly, the absolute tape speed in the fast-rewind mode is limited in the above-described apparatus.

According to the present invention there is provided apparatus for reproducing digital signals recorded on a recording tape, the apparatus comprising:

rotary head means for scanning the recording tape for generating reproduced digital signals in response to the digital signals recorded on the tape;

drive means for transporting the tape past the head means and for rotating the head means so that a relative speed is established between the head means and the tape;

mode-selecting means for controlling the drive means so that the tape is selectively transported in first and second directions at an absolute tape speed that can be varied in correspondence with selected operating modes of the apparatus;

servo-means for adjusting the speed of rotation at which the drive means rotates the head means in correspondence with variations of said absolute tape speed so that said relative speed is maintained at a substantially constant value for all of said operating modes of the apparatus;

control means for causing the drive means normally to effect said rotation of the head means in a normal direction and to effect said rotation of the head means in a reverse direction during transporting of the tape at a high absolute speed in one of said first and second directions; and

means for reversing the sequence of reproduced digital signal portions generated by the rotary head means during said rotation of the head means in the reverse direction.

A preferred embodiment of the invention described hereinbelow provides an improved apparatus of the rotary head type, for reproducing digital signals recorded on a tape, which avoids or at least reduces the above-described difficulties encountered with previously proposed apparatus of that type. More specifically, the preferred apparatus is effective to maintain a substantially constant relative speed between the rotary head and the tape for all operating modes of the apparatus, without unduly reducing the speed of rotation of the rotary head for any of such operating modes. The preferred apparatus has normal playback, fast-forward and fast-rewind modes, and the relative speed between the rotary head and the tape is substantially the same for the fast-forward mode and the fast-rewind mode as for the normal playback mode, while avoiding any need to reduce unduly the speed of rotation of the rotary head in the fast-rewind mode so that the tape can be transported at a high speed in the fast-rewind mode.

The invention will now be further described, by way of illustrative and non-limiting example, with reference to the accompanying drawings, in which the same references are used for identifying corresponding parts or components in the several figures, and in which:

Figure 1 is a vector diagram illustrating the relationship of tape transport speed, speed of rotation of the rotary head and relative speed between the rotary head and tape for the normal playback mode, fast-forward mode and fast-rewind mode of an apparatus for reproducing digital signals as disclosed in our above-mentioned European Patent Application No. 85307747.7;

Figure 2 is a vector diagram, similar to that of Figure 1, to which reference will be made in explaining apparatus embodying the present invention;

Figure 3 is a diagrammatic view of a length of recording tape with skewed record tracks thereon, and illustrating the loci along which a rotary head of apparatus embodying the present invention scans the tape in various operating modes of the apparatus;

Figure 4 is a block diagram illustrating apparatus embodying the present invention for recording and reproducing digital signals; and

Figure 5 is a block diagram showing a portion of the apparatus of Figure 4 in greater detail.

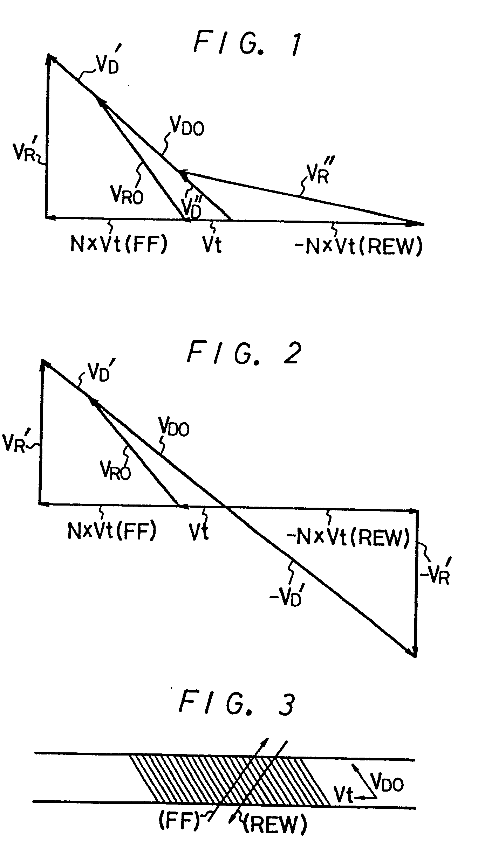

Figure 1 of the drawings is a vector diagram that relates to an apparatus for reproducing digital signals recorded on a tape, which has a substantially constant relative speed between a rotary head and the tape for a normal playback mode and also for a fast-forward mode in which the tape is transported in a forward direction and for a fast-rewind mode in which the tape is transported in a reverse direction, for example as disclosed in detail in our above-mentioned European Patent Application No. 85307747.7. In Figure 1, $V_t$ designates the tape transport speed in the forward direction for the normal playback mode, $V_{DO}$ designates the speed of rotation of the rotary head for the normal playback mode, and $V_{RO}$ designates the relative speed between the rotary head and the tape of the normal playback mode. For the fast-forward mode (FF), the relatively high tape transport speed is indicated as $N \times V_t$, that is, the tape transport speed for the fast-forward mode is a multiple N of the tape transport speed $V_t$ for the normal playback mode. Further, for the fast-forward mode, the speed of rotation of the rotary head and the relative speed between the rotary head and the tape for the fast-forward mode are indicated at $V_D'$ and $V_R'$, respectively. For the fast-rewind mode (REW), the tape transport speed is indicated as $-N \times V_t$ and is shown to be in the direction opposite to the tape transport for the fast-forward and normal playback modes, while the speed of rotation of the rotary head and the relative speed between the rotary head and the tape are indicated at $V_D''$ and $V_R''$, respectively, for the fast-rewind mode.

It will be apparent from Figure 1 that, in order for the relative speeds between the rotary head and the tape for the fast-rewind mode, the fast-forward mode and the normal playback mode to be substantially equal to each other, that is to satisfy the condition that $V_{RO}=V_R'=V_R''$, the speeds of rotation of the rotary head for the fast-forward mode, the normal playback mode and the fast-rewind mode, respectively, must satisfy the inequality that $V_D'$ is greater than $V_{DO}$ which is greater than $V_D''$. Considering the fast-rewind mode, for example, as employed in a search operation, it will be appreciated that the speed of rotation of the head must be less than that for the normal playback mode. As the tape transport speed is increased in the fast-rewind mode, that is, as the value of N is increased, the speed of rotation of the rotary head, and thus of the associated tape guide drum, has to be correspondingly decreased for maintaining the constant relative speed between the rotary head and the tape until, theoretically, a point is reached at which the speed of rotation of the head and drum is reduced to zero. Such a reduction of the rotational speed of the rotary head and drum is disadvantageous, for the reason that will now be explained.

If a frequency or pulse generator associated with the guide drum for detecting its speed of rotation and phase is of a type employing a magnet for inducing a current in a coil as it passes the coil, the output from the frequency or pulse generator will be decreased in response to a substantial reduction in the speed of rotation of the rotary head and drum so that reliable information concerning the speed of rotation and phase of the rotary head and drum may not be obtained.

Further, in the case of a recording and reproducing apparatus of a type in which the tape is wrapped around a portion of the peripheral surface of the guide drum enclosing a wrapping angle of 90°, there exists a period during each revolution of the guide drum when a rotary head is not in contact with the tape. Therefore, if the speed of rotation of the rotary head and guide drum is reduced to zero, as described above, there is a danger that the guide drum may come to rest in a position where no head is in contact with the tape. Therefore, in that case, it is necessary to provide the drum with a device to stop the drum in a position where a head contacts the tape.

Furthermore, the affect of external disturbances on the operation of the recording and reproducing apparatus is much greater when the speed of rotation of the head is low as compared with the case when the speed of rotation is high.

Moreover, some motors used for driving the rotary head and associated guide drum have a minimum practical speed of rotation, with the result that the maximum tape transport speed, that is, the value of the multiple N, for the fast-rewind mode is limited to take account of the practical minimum speed of the head drive motor.

The foregoing problems can be avoided by rotating the rotary head and associated guide drum in the fast-rewind mode in a direction that is reversed relative to the direction of rotation of the rotary head and guide drum in the normal playback mode and the fast-forward mode, as is diagrammatically illustrated in Figure 3. This is referred to as "the drum reverse rotation system".

It will be apparent from Figure 2 that, when the drum reverse rotation system is employed, the speed of rotation $-V_D'$ of the rotary head and drum at which the relative speed $-V_R'$ for the fast-rewind search mode becomes equal to the relative speed $V_{RO}$ for the normal playback mode differs from the speed of rotation $V_D'$ for the fast-forward mode only in respect to the direction of such rotation. In other words, the speed of rotation $-V_D'$ has the same absolute value as the speed of rotation $V_D'$. Therefore, in the drum reverse rotation system, the absolute value or magnitude of the speed of rotation of the rotary head and associated drum in a search operation, that is in the fast-forward mode and in the fast-rewind mode, is always larger than the absolute value or magnitude of the rotational speed of the rotary head and drum in the normal playback mode so long as the value of N is greater than 1.

Referring now to Figure 3, in which the locus or trace of the rotary head relative to the tape is diagrammatically shown for the fast-forward search mode (FF) and for the rewind search mode (REW) of an apparatus embodying the invention that incorporates the drum reverse rotation system, it will be seen that signals reproduced in the rewind search mode are in a sequence that is the reverse of the sequence of such signals when reproduced in the fast-forward search mode. However, as will be described more fully hereinbelow, the reverse sequence of the signals reproduced in the rewind search mode can be dealt with by temporarily storing reproduced signals in a memory in the order in which the signals are reproduced from the tape, and then reading out the reproduced signals from the memory in the reverse order.

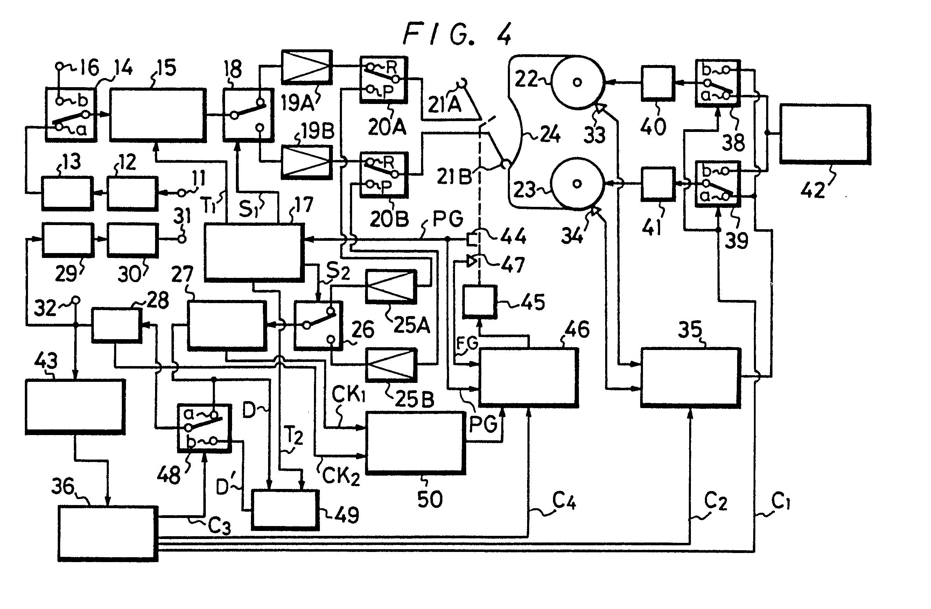

Referring now to Figure 4, it will be seen that, in a recording and reproducing apparatus embodying this invention that incorporates the drum reverse rotation system, an analog signal (for example, an audio signal) applied to an input terminal 11 is supplied from the terminal 11 through a low pass filter 12 to an analog-to-digital (A/D) converter 13 in which the analog signal is converted to digital signals. The digital signals from the A/D converter 13 are applied to a contact a of a switching circuit 14 having a movable contact connected to a recording signal processing or generating circuit 15. The movable contact of the switching circuit 14 can be changed over to engage a fixed contact b connected to a terminal 16 so that, in that condition of the switching circuit 14, digital signals supplied to the terminal 16 may be applied directly therefrom to the recording signal processing circuit 15.

The recording signal processing circuit 15 receives also a timing signal $T_1$ from a timing signal generating circuit 17 and, on the basis thereof, effects suitable processing of the data represented by the received digital signals, for example the addition of an error correction code for the data, interleaving of the data, modulation of the data, and so on. The resulting processed digital signals are supplied from the circuit 15 to a head switching circuit 18 which is operated by a suitable switching signal $S_1$ from the timing signal generating circuit 17. The head switching circuit 18 has two fixed contacts respectively connected through recording amplifiers 19A and 19B to record contacts R of record-playback switches 20A and 20B connected to rotary heads 21A and 21B, respectively. The rotary heads 21A and 21B are associated in a conventional manner with a guide drum (not shown) so as alternately to scan across a magnetic tape 24 which extends between a supply reel 22 and a take-up reel 23 and which is guided or wrapped about a portion, for example a 90° angular extent, of the circumference of the guide drum. The head switching circuit 18 is disposed in the position shown in Figure 4 for supplying the output of the recording signal processing circuit 15 to the rotary head 21A during a first half-revolution interval including the period in which the head 21A is in contact with the tape 24, and the switching circuit 18 is changed over by the switching signal $S_1$ from the circuit 17 for supplying the output of the recording signal processing circuit 15 to the rotary head 21B during a second half-revolution interval which includes the period in which the head 21B is in contact with the tape 24.

In order to synchronise the changing over of the switching circuit 18 with the rotational phase of the rotary heads 21A and 21B, a pulse generator 44 is associated with a shaft by which a motor 45 drives the rotary heads 21A and 21B, for example at a speed of rotation of 30 revolutions per second (in the case of a 30 frame per second television system) for the normal playback mode. The resulting pulse signal PG having a frequency of 30 Hz, in the case of the normal playback mode, and which is indicative of the rotary phase of the heads 21A and 21B, is supplied from the pulse generator 44 to the timing signal generating circuit 17 for ensuring that the switching signal $S_1$ supplied from the circuit 17 to the switching circuit 18 will cause changing over of the circuit 18 in synchronism with the rotary phase of the heads 21A and 21B. The operation of the head drive motor 45 is controlled by a drum servo circuit 46 which is supplied with the pulse signal PG from the pulse generator 44 so that the motor 45 is servo-controlled in respect to phase on the basis of the pulse signal PG from the generator 44. The drum servo circuit 46 receives also a signal FG from a frequency generator 47 associated with the shaft of the motor 45 so that the motor is servo-controlled, in respect to speed or velocity changes, on the basis of the frequency signal FG from the generator 47.

The switches 20A and 20B are maintained in the condition shown in Figure 4 during a recording operation of the apparatus. When a reproducing or playback operation is desired, the switches 20A and 20B are changed over to engage respective playback contacts P thereof, via respective playback amplifiers 25A and 25B, with respective contacts of a head switching circuit 26. The head switching circuit 26 is operatred similarly to the head switching circuit 18 by a switching signal $S_2$ from the timing signal generating circuit 17. The switching signal $S_2$ from the circuit 17 has a frequency of 30 Hz for the normal playback mode and is again synchronised with the rotational phase of the heads 21A and 21B so that the head switching circuit 26 transmits the output of the playback amplifier 25A during the half-rotation interval which includes the period of tape contact of the head 21A, and further so that the switch 26 is changed over to transmit the output of the playback amplifier 25B during the other half-rotation interval that includes the tape contact period of the head 21B.

The output of the switching circuit 26 is supplied to a so-called electromagnetic transducer circuit 27 in which the reproduced digital signals are suitably processed, for example by means of an equaliser, a comparator and a phase locked loop (PLL) circuit (not shown in Figure 4) which are arranged in sequence, for example as disclosed in detail in our above-mentioned European Patent Application No. 85307747.7. The processed digital signals from the output of the circuit 27 are supplied to a contact a of a switching circuit 48 and also to a memory 49 which is described in detail hereinbelow. When the switching circuit 48 is in the condition shown in Figure 4, the processed digital signals from the circuit 27 are supplied through the switching circuit 48 to an error detecting/correcting circuit 28 in which error correction is carried out, if necessary. The corrected digital signals are then supplied to a digital-to-analog (D/A) converter 29 to provide a corresponding analog signal which is supplied through a low pass filter 30 to an output terminal 31. The output of the error detecting/correcting circuit 28 is also connected to a terminal 32 at which the digital data may be derived directly.

Rotation detectors 33 and 34 are provided to detect the speeds of rotation of the reels 22 and 23, respectively. Outputs of the rotation detectors 33 and 34 are supplied to a reel servo circuit 35, and an output of the reel servo circuit 35 is supplied to contacts b and a of switching circuits 38 and 39, respectively. Movable contacts of the switching circuits 38 and 39 are connected to motors 40 and 41 for driving the reels 22 and 23, respectively. A back tension generating circuit 42 provides a suitable output signal to contacts a and b of the switching circuit 38 and 39, respectively. The switching circuits 38 and 39 are controlled by a control signal $C_1$ from a microcomputer 36 acting as a system controller. Thus, in the fast-forward search mode of the apparatus, the switching circuits 38 and 39 engage their contacts a, as shown in Figure 4, so that the output of the reel servo circuit 35 is supplied through the contact a of the switching circuit 39 to the motor 41 for servo-controlling the motor 41 while driving the take-up reel 23. The microcomputer 36 supplies also a control signal $C_2$ to the reel servo circuit 35 for determining the speed at which the selected motor 40 or 41 is driven, and thus the tape transport speed, in dependence on the selected mode of operation, for example in response to actuation of a respective push-button or key providing an input to the microcomputer 36.

Further, in the fast-forward search mode, the output of the back tension generating circuit 42 is supplied through the contact a of the switching circuit 38 to the motor 40 so that a suitable back tension is applied to the supply reel 22 by the motor 40.

When the normal playback mode is selected, the control signal $C_1$ from the microcomputer 36 causes the switching circuits 38 and 39 to remain in the conditions shown in Figure 4, but the control signal $C_2$ from the microcomputer 36 to the reel servo circuit 35 for determining the tape speed is changed so that the reel servo circuit 35 causes operation of the motor 41 at a speed consistent with the desired speed of tape transport for the normal playback mode.

Upon selection of the fast-rewind search mode, the control signal $C_1$ from the microcomputer 36 causes the switching circuits 38 and 39 to change over from the condition shown in Figure 4 to the condition in which the fixed contacts b thereof are engaged. Thus, in the fast-rewind search mode, the output of the reel servo circuit 35 is applied through the switching circuit 38 to the reel drive motor 40, while the output of the back tension generating circuit 42 is supplied through the switching circuit 39 to the reel drive motor 41. At the same time, the control signal $C_2$ for determining the tape speed, which is supplied from the microcomputer 36 to the reel servo circuit 35, ensures that the motor 40 and the supply reel 22 will be driven at a high speed consistent with the transport of the tape in the reverse direction at the speed $N \times V_t$.

The output of the error detecting/correcting circuit 28 is shown to be connected also to a sub-code extracting circuit 43 in which sub-code information, for example programme number, time code and the like, included in the reproduced digital signals is extracted from the signals and supplied to the microcomputer 36. Accordingly, the microcomputer 36 controls the high speed search operation by comparing the sub-code information received from the circuit 43 with the corresponding programme number, time code or the like identifying the data being searched.

The memory 49 may be of the first in, last out (FILO) type in which the data obtained from one scan of the tape 24 by the head 21A or 21B is written in the order in which the data is reproduced and, thereafter, the stored data is read out in the reverse order, as described hereinbelow in greater detail. If desired, the memory 49 may be incorporated in the error detecting/correcting circuit 28. In any case, an output of the memory 49 is connected to a contact b of the switching circuit 48, which is suitably controlled by a control signal $C_3$ from the microcomputer 36 so that the switching circuit 48 is changed over to engage its contact b only in the fast-rewind search mode, whereas the switching circuit 48 remains in the condition illustrated in Figure 4, that is with its contact a engaged, for all other operating modes of the apparatus. Accordingly, in any operating mode of the apparatus other than the fast-rewind search mode, the output from the circuit 27 is transmitted directly through the switching circuit 48 to the error detecting/correcting circuit 28. However, in the fast-rewind search mode, the switching circuit 48 is changed over by the control signal $C_3$ from the microcomputer 36 so as to engage its contact b with the result that the output from the circuit 27 corresponding to a scan of the tape by the head 21A or 21B is first stored in the memory 49 and then read out therefrom in the reverse direction for transmission through the contact b of the switching circuit 48 to the error detecting/correcting circuit 28.

The timing signal generating circuit 17 provides to the memory 49 a pulse signal $T_2$ having a frequency twice as high as that of the head switching pulse signals $S_1$ and $S_2$ which are supplied from the timing signal generating circuit 17 to the head switching circuits 18 and 26. In response to the relatively high frequency pulse signal $T_2$ from the timing signal generating circuit 17, the memory 49 is made operative, for example during a high level portion of a pulse of the signal $T_2$ in which the head 21A is in contact with the tape 24, to write in the memory 49 the output from circuit 27, whereas, during a low level period of the pulse of the signal $T_2$, in which the head 21A is out of contact with the tape 24, the data previously written in the memory 49 is read out therefrom in the reverse direction. Similarly, during the high level period of the next pulse of the signal $T_2$ from the circuit 17, in which the head 21B is in contact with the tape 24, the output from the circuit 27 is written in the memory 49 and, during the low-level period of that next pulse of the signal $T_2$, in which the head 21B is out of contact with the tape 24, the data previously written in the memory 49 is read out therefrom in the reverse direction.

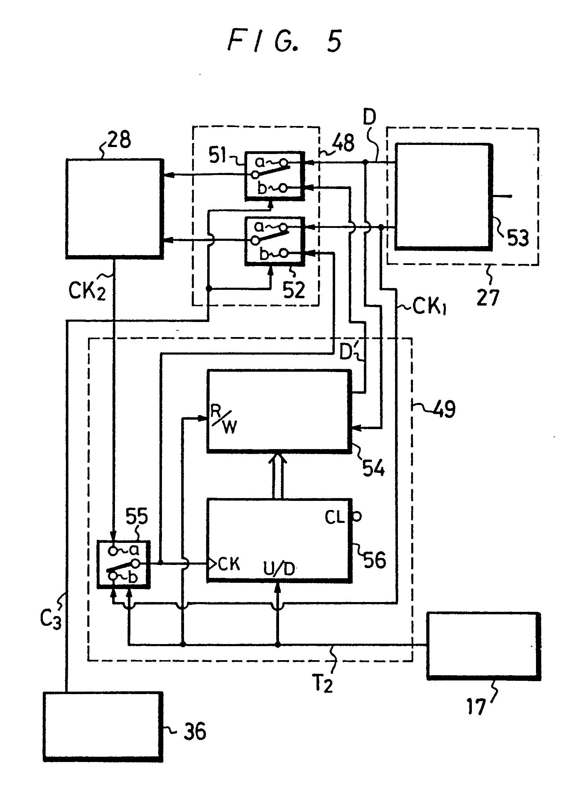

A clock signal $CK_1$ derived from the PLL circuit (shown at 53 in Figure 5) included in the electromagnetic transducer circuit 27 is, as shown in Figure 4, supplied to a relative speed control circuit 50, and an output from the circuit 50 is supplied to the drum servo circuit 46. The affect of the output of the relative speed control circuit 50 on the operation of drum servo circuit 46 is to ensure that the speed of rotation of the heads 21A and 21B and the associated drum is varied or controlled so as to ensure that the relative speed between each rotary head and the tape is at all times, for example in the fast-forward search mode and the fast-rewind search mode, substantially the same as the relative speed in the normal playback mode. An example of the relative speed control circuit 50 is described in detail in our above-mentioned European Patent Application No. 85307747.7.

The drum servo circuit 46 is controlled also by a control signal $C_4$ from the microcomputer 36 so that, at the same time that the switching circuit 48 is changed over to engage its contact b for the fast-rewind search mode, the control signal $C_4$ causes the motor 45 to rotate the heads 21A and 21B in the direction opposite to the direction of rotation of the rotary heads for the normal playback mode and the fast-forward mode. Simultaneously, the reel servo circuit 35 receives the control signal $C_2$ from the microcomputer 36 for ensuring that the tape 24 will be driven in the reverse direction at the requisite high speed ($N \times V_t$) of tape transport for the fast-rewind search mode.

In the fast-rewind search mode of the apparatus embodying this invention, as described above, since the direction of rotation of the motor 45, and thus of the rotary heads and associated drum, is reversed as compared with the direction of rotation thereof for the normal playback mode and the fast-forward search mode, the relative speed between the rotary heads and the tape can be controlled so as to be substantially equal to the relative speed for the normal playback mode without requiring that the speed of rotation of the rotary heads and associated drum be made lower than the speed of rotation thereof in the normal playback mode. Thus, the above-described disadvantages of a very low speed of rotation of the heads and drum are avoided.

Referring now to Figure 5, in which a possible form of arrangement of the memory 49 and the associated components of the apparatus are shown in greater detail, it will be seen that the switching circuit 48 includes switches 51 and 52 controlled by the signal $C_3$ from the microcomputer 36 so as simultaneously to engage contacts a or b thereof. The contacts a of the switches 51 and 52 are shown to be connected to the PLL circuit 53 of the electromagnetic transducer circuit 27 for respectively receiving therefrom data D and the clock signal $CK_1$ derived from the reproduced digital signals. Thus, in the fast-forward search mode, for which the switches 51 and 52 are made to engage their contacts a, the data D and clock signal $CK_1$ are transmitted from the circuit 27 through the switches 51 and 52 to the error detecting/correcting circuit 28.

For the fast-rewind search mode, the switches 51 and 52 are changed over, in response to the control signal $C_3$ from the microcomputer 36, so as to engage their contacts b, whereby the data D from the circuit 27 is supplied to a data input terminal of a random access memory (RAM) 54 provided in the memory 49, while the clock signal $CK_1$ from the circuit 27 is supplied to a contact b of a switching circuit 55. An output of the switching circuit 55 is connected to a clock input CK of an up/down counter 56, and also to the contact b of the switch 52, while an output of the RAM 54 is connected to the contact b of the switch 51.

Changing over of the switching circuit 55, changing over between up and down operation of the up/down counter 56, and changing over between writing and reading operation of the RAM 54 while being addressed by the output of counter 56, are all controlled by the switching signal $T_2$ generated by the timing signal generating circuit 17. The switching signal $T_2$, as previously mentioned, has a frequency equal to twice the frequency of the switching signals $S_1$ and $S_2$ controlling the head switching circuits 18 and 26. Thus, the switching signal $T_2$ applied from circuit 17 to the RAM 54, the switching circuit 55 and the counter 56 in Figure 5 may, for example, have a high level during each period in which the head 21A or 21B is in contact with the tape, while a low level of the signal $T_2$ occurs during each period in which each head is out of contact with the tape.

By reason of the foregoing characteristics of the switching signal $T_2$, during the period in which a head 21A or 21B is in contact with the tape 24, the switching circuit 55 is caused to engage its contact b so that the reproduced clock signal $CK_1$ is supplied to the clock input CK of the up/down counter 56 which is caused by the signal $T_2$ to count the reproduced clock signal $CK_1$ in the upward direction. The upwardly changing content or output of the counter 56 is applied to the RAM 54 for sequentially addressing the RAM and, at the same time, the signal $T_2$ is applied as a read/write control signal to the RAM 54 to cause writing of the data from the PLL circuit 53 at successive addresses in the RAM 54. In other words, the reproduced data D obtained from the circuit 27 is written in the RAM 54 at sequential addresses determined by the increasing output or content of the counter 56. During the subsequent period in which the head 21A or 21B is out of contact with the tape 24, the signal $T_2$ causes the switching circuit 55 to be changed over and thereby to engage its contact a, with the result that a clock signal $CK_2$ of constant or standard frequency is supplied from the error detecting/correcting circuit 28 through the switching circuit 55 to the clock input CK of the counter 56, and to the contact b of the switch 52. Further, during the period in which the head 21A or 21B is not in contact with the tape, the signal $T_2$ causes the counter 56 to count the constant frequency clock signal $CK_2$ in the downward direction, and also causes reading out of the RAM 54. However, during such reading out of the RAM 54, the content at the output of the counter 56 is decreasing incrementally due to the down-counting operation of the counter, with the result that the addressing sequence of the RAM 54 is reversed with respect to the sequence employed for writing and the data D' read out of the RAM 54 is reversed in its sequence relative to the reproduced data D previously written therein.

As noted earlier, in the fast-rewind search mode the switches 51 and 52 are made to engage their contacts b so that, during the above-described reading out of the data D' from the RAM 54, the data D' (in the reversed order or sequence) is supplied through the switch 51 to the error detecting/correcting circuit 28, while the clock signal $CK_2$ is supplied through the switch 52 to the circuit 28.

Since the order in which the recorded signals are reproduced from the tape in the fast-rewind search mode of the apparatus embodying this invention is the reverse of the normal order due to the rotation of the heads 21A and 21B in the reverse direction, as shown in Figure 3, the above-described further reversing of the order of the data D' read out from the RAM 54 ensures that the data D' will appear in the same sequence or order in which it was originally recorded. Thus, the sub-code information obtained from the extracting circuit 43 (Figure 4) in the fast-rewind search mode can still be employed in the microcomputer 36 for controlling the search operation even though such sub-code information was obtained from date reproduced during rotation of the heads 21A and 21B in the reverse direction.

In the apparatus embodying the invention, the speed of rotation of the heads 21A and 21B at which the relative speed between the heads and the tape in the fast-rewind search mode becomes equal to the magnitude of the relative speed in the normal playback mode can be determined while rotating the drum and rotary heads in the reverse direction, that is in a direction opposite to the direction in which the tape is transported in the normal playback mode and the fast-forward search mode. Thus, without making the absolute value of the speed of rotation of the drum and rotary heads for the fast-forward and fast-rewind search modes less than the absolute value of such speed of rotation for the normal playback mode, the relative speed between the heads and tape for each high speed tape transport playback mode (fast-forward and fast-rewind search modes) can be controlled so as to be equal to the relative speed for the normal playback mode. In other words, the speed of rotation of the drum and rotary heads in the search mode can be maintained at least as high as the speed of rotation of the drum and rotary heads in the normal playback mode, thereby avoiding the disadvantageous external disturbance and instability of the pulse signals PG and FG from the generators 44 and 47 and of the servo circuit 46 that would result if the speed of rotation of the motor 45 had to be decreased to nearly zero for the fast-rewind search mode. Since there is no need to reduce the speed of rotation of the motor 45, and thus of the rotary heads 21A and 21B and the associated drum to approximately zero, it is also unnecessary to provide any additional device for disposing the heads in a predetermined position at such time. Moreover, there is no need to employ, as the motor 45, a motor that can be rotated at a slow speed, for example, lower than 100 revolutions per minute. Rather, the motor 45 only needs to be a reversible motor.

7

## Claims

1. Apparatus for reproducing digital signals recorded on a recording tape, the apparatus comprising:

rotary head means (21A, 21B) for scanning the recording tape (24) for generating reproduced digital signals in response to the digital signals recorded on the tape;

drive means (35, 45) for transporting the tape (24) past the head means (21A, 21B) and for rotating the head means (21A, 21B) so that a relative speed is established between the head means and the tape;

mode-selecting means (36) for controlling the drive means (35) so that the tape (24) is selectively transported in first and second directions at an absolute tape speed that can be varied in correspondence with selected operating modes of the apparatus;

servo-means (46) for adjusting the speed of rotation at which the drive means (45) rotates the head means (21A, 21B) in correspondence with variations of said absolute tape speed so that said relative speed is maintained at a substantially constant value for all of said operating modes of the apparatus;

control means (36) for causing the drive means (45) normally to effect said rotation of the head means (21A, 21B) in a normal direction and to effect said rotation of the head means (21A, 21B) in a reverse direction during transporting of the tape (24) at a high absolute speed in one of said first and second directions; and

means (49, 56, 17) for reversing the sequence of reproduced digital signal portions generated by the rotary head means (21A, 21B) during said rotation of the head means (21A, 21B) in the reverse direction.

2. Apparatus according to claim 1, in which the control means (36) is operative to cause said rotation of the head means (21A, 21B) in said reverse direction upon the selection of a fast-rewind mode of the apparatus.

3. Apparatus according to claim 1, in which the mode-selecting means (36) is operative to control the drive means (40, 41) so that said absolute tape speed and direction are selectively established to be appropriate to a playback mode, a fast-forward mode, and a fast-rewind mode, the absolute tape speed in the fast-forward and rewind modes is a substantial multiple of the absolute tape speed in the playback mode, said substantially constant value of said relative speed is appropriate to the playback mode, and said rotation of the head means (21A, 21B) in said reverse direction occurs upon selection of said fast-rewind mode.

4. Apparatus according to claim 1, in which the rotary head means (21A, 21B) is operative to scan the tape (24) only during a portion of each revolution of the head means, and in which the means (49, 56, 17) for reversing the sequence of the reproduced digital signals includes memory means (49) having a capacity to store the reproduced digital signals generated by the head means (21A, 21B) during each scan of the tape (24), means (56) for addressing the memory means (49) in a predetermined order for writing of the reproduced digital signals therein during said portion of each revolution of the head means (21A, 21B), and means for reversing said predetermined order in which the memory means (49) is addressed for reading out the reproduced digital signals therefrom during the remainder of said revolution of the head means (21A, 21B).

5. Apparatus according to claim 4, in which the means (56) for addressing the memory means (49) includes up/down counting means having a clock input (CK) and an addressing output which changes in said predetermined order during counting of the clock input (CK) in an upward direction, and the means for reversing the predetermined order includes timing means (17) connected to the memory means (49) and the counting means (56) and operative to cause the counting means (56) to count in upward and downward directions during writing and reading, respectively, of the memory means (49).

6. Apparatus according to claim 5, for reproducing recorded digital signals that include recorded data signals and a clock signal, comprising means (55) for applying the clock signal ($CK_1$), as reproduced by the head means (21A, 21B), to the clock input (CK) of the counting means (56) during the writing into the memory means (49), and for applying a clock signal ($CK_2$) of standard frequency to the clock input (CK) during the reading from the memory means (49).

## Patentansprüche

1. Gerät für die Wiedergabe von auf einem Aufzeichnungsband aufgezeichneten digitalen Signalen mit folgenden Merkmalen:

einer drehbaren Kopfanordnung (21A, 21B) zum Abtasten des Aufzeichnungsbandes (24) und zur Erzeugung von digitalen Wiedergabesignalen nach Maßgabe der auf dem Band aufgezeichneten digitalen Signale,

einer Antriebseinrichtung (35, 45) zum Transportieren des Bandes (24) vorbei an der Kopfanordnung (21A, 21B) und zum Drehen der Kopfanordnung (21A, 21B) derart, daß sich zwischen Kopfanordnung und Band eine Relativgeschwindigkeit ergibt,

einer Betriebsart-Wähleinrichtung (36) zum Steuern der Antriebseinrichtung (35) in der Weise, daß das Band (24) mit einer Absolutgeschwindigkeit, die entsprechend den jeweils ausgewählten Betriebsarten des Geräts variieren kann, wahlweise in einer ersten oder einer zweiten Richtung transportiert wird,

einer Servoeinrichtung (46), die die Drehzahl, mit der die Antriebseinrichtung (45) die Kopfanordnung (21A, 21B) dreht, in Abhängigkeit von Änderungen der genannten Absolutgeschwindigkeit so regelt, daß die genannte Relativgeschwindigkeit bei allen Betriebsarten des Geräts auf einem im wesentlichen konstanten Wert gehalten wird,

einer Steuereinrichtung (36), die die Antriebseinrichtung (45) so steuert,, daß diese normalerweise die Drehung der Kopfanordnung (21A, 21B) in einer Normalrichtung bewirkt und daß sie während des Bandtransports mit hoher Absolutgeschwindigkeit in der ersten oder zweiten Richtung die Drehung der Kopfanordnung (21A, 21B) in entgegengesetzter Richtung bewirkt,

und Mitteln (49, 56, 17) zur Umkehrung der Reihenfolge der digitalen Wiedergabesignale, die die Kopfanordnung (21A, 21B) bei ihrer Drehung in der genannten entgegengesetzten Richtung erzeugt.

2. Gerät nach Anspruch 1, bei dem die Steuereinrichtung (36) eine Drehung der Kopfanord-nung (21A, 21B) in der genannten entgegenge-setzten Richtung bewirkt, wenn für das Gerät die Betriebsart "schneller Rücklauf" gewählt ist.

3. Gerät nach Anspruch 1, bei dem die Betriebsart-Wähleinrichtung (36) die Antriebseinrichtung (40, 41) so steuert, daß die Absolutgeschwindigkeit und die Bewegungsrichtung des Bandes selektiv die für die Betriebsarten "Wiedergabe", "schneller Vorlauf" und "'schneller Rücklauf" geeigneten Werte haben, wobei die Absolutgeschwindigkeit des Bandes bei schnellem Vorlauf und bei schnellem Rücklauf im wesentlichen ein Vielfaches der Absolutgeschwindigkeit des Bandes im Wiedergabebetrieb ist und wobei der genannte im wesentlichen konstante Wert der Relativgeschwindigkeit die für die Wiedergabe geeignete Geschwindigkeit ist und die Drehung der Kopfanordnung (21A, 21B) in entgegengesetz-ter Richtung dann stattfindet, wenn die Betriebsart "schneller Rücklauf" gewählt ist.

4. Gerät nach Anspruch 1, bei dem die rotierende Kopfanordnung (21A, 21B) das Band nur während eines Teils jeder Umdrehung der Kopfanordnung abtastet und bei dem die Mittel (49, 56, 17) zur Umkehrung der Reihenfolge der digitalen Wiedergabesignale folgende Teile enthalten:

— eine Speichereinrichtung (49) mit einer zur Speicherung der von der Kopfanordnung (21A, 21B) während jeder Abtastung des Bandes (24) erzeugten digitalen Wiedergabesignale genügend großen Speicherkapazität,,

— Mittel (56) zur Adressierung der Speichereinrichtung (49) in einer vorbestimmten Reihenfolge, um die digitalen Wiedergabesignale während des genannten Teils jeder Umdrehung der Kopfanordnung (21A, 21B) in die Speichereinrichtung einzuspeichern, und

— Mittel zur Umkehrung der vorbestimmten Reinhenfolge der Adressierung der Speichereinrichtung (49), um die digitalen Wiedergabesignale während des übrigen Teils der Umdrehung der Kopfanordnung (21A, 21B) aus der Speicherein-richtung auszulesen.

5. Gerät nach Anspruch 4, bei dem die Mittel (56) zur Adressierung der Speichereinrichtung (49) eine Vorwärts-/Rückwärtszähleinrichtung (56) mit einem Takteingang (CK) und einem Adressenausgang aufweisen, wobei der Adressenausgang sich beim Zählen des Takteingangs (CK) in Vorwärtsrichtung in der genannten vorbestimmten Reihenfolge ändert und wobei die Mittel zur Umkehrung der vorbestimmten Reihenfolge eine mit der Speichereinrichtung (49) und der Zähleinrichtung (56) verbunden Zeitgebereinrichtung (17) enthalten, die bewirkt, daß die Zähleinrichtung (56) während des Einspeicherns in die bzw. während des Auslesens aus der Speichereinrichtung (49) in Vorwärts- bzw. in Rückwärtsrichtung zählt.

6. Gerät nach Anspruch 5 für die Wiedergabe aufgezeichneter digitaler Signale, die Datensignale und ein Taktsignal enthalten, mit Mitteln (55), die beim Einspeichern in die Speichereinrichtung (49) das Taktsignal ($CK_1$) so, wie es von der Kopfanordnung (21A, 21B) wiedergegeben wird, an den Takteingang (CK) der Zähleinrichtung (56) anlegen und die beim Auslesen aus der Speichereinrichtung (49) ein Taktsignal ($CK_2$) mit einer Standardfrequenz an den den Takteingang (CK) der Zähleinrichtung (56) anlegen.

**Revendications**

1. Appareil pour reproduire des signaux numériques enregistrés sur une bande d'enregistrement, l'appareil comprenant:

un moyen à têtes tournantes (21A, 21B) pour lire la bande d'enregistrement (24) afin d'engendrer des signaux numériques reproduits en réponse aux signaux numériques enregistrés sur la bande;

un moyen d'entraînement (35, 45) pour transporter la bande (24) au-delà du moyen à têtes (21A, 21B) et pour faire tourner le moyen à têtes (21A, 21B) de telle sorte qu'une vitesse relative est établie entre le moyen à têtes et la bande;

un moyen de sélection de mode (36) pour commander le moyen d'entraînement (35), de telle sorte que la bande (24) est transportée sélectivement dans des premier et second sens à une vitesse absolue de bande qui peut être changée en correspondance avec les modes de fonctionnement sélectionnés de l'appareil;

un moyen d'asservissement (46) pour régler la vitesse de rotation à laquelle le moyen d'entraînement (45) fait tourner le moyen à têtes (21A, 21B) en correspondance avec les variations de la vitesse absolue de bande, de telle sorte que la vitesse relative est maintenue à une valeur effectivement constante pendant l'ensemble des modes de fonctionnement de l'appareil;

un moyen de commande (36) pour faire en sorte que le moyen d'entraînement (45) fasse normalement tourner le moyen à têtes (21A, 21B) dans un sens normal et fasse tourner le moyen à têtes (21A, 21B) dans un sens inverse pendant le transport de la bande (24) à une valeur absolue élevée dans un des premier et second sens; et

un moyen (49, 56, 17) pour inverser la suite des parties de signaux numériques reproduits générées par le moyen à têtes tournantes (21A, 21B) pendant la rotation du moyen à têtes (21A, 21B) dans le sens inverse.

2. Appareil selon la revendication 1, dans lequel le moyen de commande (36) est actif pour entraîner la rotation du moyen à têtes (21A, 21B) dans le sens inverse lors de la sélection d'un mode de rebobinage rapide de l'appareil.

3. Appareil selon la revendication 1, dans lequel le moyen de sélection de mode (36) est actif pour commander le moyen d'entraînement (40, 41) de telle sorte que la vitesse absolue de bande et le sens sont établis sélectivement comme étant appropriés à un mode de lecture, un mode d'avance rapide et à un mode de rebobinage rapide, la vitesse absolue de bande dans les modes d'avance rapide et de rebobinage rapide est un multiple substantiel de la vitesse absolue de bande dans le mode de lecture, la valeur effectivement constante de la vitesse relative est appropriée au mode de lecture, et la rotation du moyen à têtes (21A, 21B) dans le sens inverse se produit lors de la sélection du mode de rebobinage rapide.

4. Appareil selon la revendication 1, dans lequel le moyen à têtes tournantes (21A, 21B) est actif pour lire la bande (24) uniquement pendant une partie de chaque tour du moyen à têtes, et dans lequel le moyen (49, 56, 17) pour inverser la suite des signaux numériques reproduits comprend un moyen à mémoire (49) ayant la capacité de mémoriser les signaux numériques reproduits engendrés par le moyen à têtes (21A, 21B) pendant chaque lecture de la bande (24), un moyen (56) pour adresser le moyen à mémoire (49) dans un ordre prédéterminé pour l'écriture des signaux numériques reproduits dans celui-ci pendant la partie de chaque tour du moyen à têtes (21A,

21B), et un moyen pour inverser l'ordre prédéterminé dans lequel le moyen à mémoire (49) est adressé pour la lecture des signaux numériques reproduits dans celui-ci pendant le reste du tour du moyen à têtes (21A, 21B).

5. Appareil selon la revendication 4, dans lequel le moyen (56) pour adresser le moyen à mémoire (49) comprend un moyen de comptage progressif/régressif comportant une entrée d'horloge (CK) et une sortie d'adressage qui change dans l'ordre prédéterminé pendant le comptage des signaux d'entrée d'horloge (CK) dans un sens progressif, et le moyen pour inverser l'ordre prédéterminé comprend un moyen de synchronisation (17) connecté au moyen à mémoire (49) et au moyen de comptage (56) et actif pour que le moyen de comptage (56) compte dans les sens progressif et régressif respectivement pendant une écriture et une lecture du moyen à mémoire (49).

6. Appareil selon la revendication 5, pour reproduire des signaux numériques enregistrés qui comprennent des siganux de données enregistrées et un signal d'horloge, comprenant un moyen (55) pour appliquer le signal d'horloge $(CK_1)$, tel que reproduit par le moyen à têtes (21A, 21B), à l'entrée d'horloge (CK) du moyen de comptage (56) pendant l'écriture dans le moyen à mémoire (49), et pour appliquer un signal d'horloge $(CK_2)$ de fréquence standard à l'entrée d'horloge (CK) pendant la lecture dans le moyen à mémoire (49).

## F I G. 1

## F I G. 2

## F I G. 3

1

FIG. 4

EP 0 197 782 B1

EP 0 197 782 B1

F I G. 5

3